# EUROPEAN PATENT APPLICATION

(11) **EP 3 179 417 A1**
(43) Date of publication of application: **14.06.2017**
(21) Application number: 16201655.4
(22) Date of filing: 01.12.2016
(51) Int. Cl.: G06Q 10/00

(54) **SIMULTANEOUS MULTIPLE-USER POSTAGE METER/SHIPPING DEVICE**

(30) Priority: 11.12.2015 US 201514965940
(71) Applicant: Pitney Bowes Inc., Danbury, CT 06810 (US)
(72) Inventor: Cristiani, Elaine B., Stratford, CT Connecticut 06614 (US); Kirschner, Wesley A., Fairfield, CT Connecticut 06823 (US); Reilly, Christopher, Shelton, CT Connecticut 06484 (US); Tsui, Gerald K., Weston, CT Connecticut 06883 (US)
(74) Representative: Hoffmann Eitle

(57) **Abstract**

A mail processing device whose operation can be accomplished remotely and support multiple users simultaneously is provided. The present invention utilizes secure simultaneous multiple user/application access over a network. This supports software configuration, data access, control of a postal security device (PSD), indicium creation, and control of a print engine. The invention is realized by binding core embedded software to a web server within the device and using a web technology stack that allows many users to access the software. HTTPS and a web socket based API protocol are used to enable communications with external processing devices and web applications

## Description

The invention disclosed herein relates generally to mail processing machines, and more particularly to allowing multiple users to simultaneously access a mail processing machine using networked external processing devices.

Mail processing machines often include different modules that automate the processes of producing mail pieces. A typical mail processing machine can include a one or more different modules or sub-systems each of which performs a different task on a mail piece. In larger machines, the mail piece is conveyed downstream utilizing a transport mechanism, such as rollers or a belt, to each of the modules. Such modules could include, for example, a singulating module, i.e., separating a stack of mail pieces such that the mail pieces are conveyed one at a time along the transport path, a moistening/sealing module, i.e., wetting and closing the glued flap of an envelope, a weighing module, and a metering/printing module, i.e., applying evidence of postage to the mail piece. In smaller machines, mail pieces may be fed one at a time by hand under a printing module to apply evidence of postage to the mail piece. The size of a mailing machine and exact configuration is, of course, particular to the needs of the user.

In some situations, it is desirous to allow a mailing machine to interface with an external processing device, such as, for example, a personal computer, tablet device, smartphone, etc. Such an external processing device can provide the user with an enhanced user interface and allow the user to control certain operations of the mail processing machine remotely as well as access to other products or services that the mailing machine alone could not provide. Unfortunately, conventional mailing machines can only be interacted with by a single operator at a time, either by directly interacting with an input on the mailing machine for through another external processing device that is connected to the mailing machine via a network. If multiple operators want to use the mailing machine at the same time, they would not be able to do so, and instead would need to take turns. One user would perform his transaction and the next user would have to wait until the first user is finished before being able to use the mailing machine for any purpose. This greatly reduces the effectiveness of such systems.

The present invention provides a mail processing machine whose operation can be accomplished remotely and support multiple users. The present invention utilizes secure simultaneous multiple user/application access over a network. This supports software configuration, data access, control of a postal security device (PSD), indicium creation, and control of a print engine. The invention is realized by binding core embedded software to a web server within the device and using a web technology stack that allows many users to access the software. HTTPS and a web socket based API protocol are used to enable communications with external processing devices and web applications. A secure file system is present that can cache user credentials to allow access to the machine when it is offline from the Internet. The device also contains its own browser for rendering the user experience on its own local display and allowing access to other applications on the web. This technology enables a plurality of users to use the device at the same time, applies logic within the device that brokers transactions in case there is a dependency on one being complete before another transaction is started, makes sure that specific transactions stay linked to specific users, allows the same user experience to occur on the machine or external processing device, and gives multiple users access to peripherals attached to the mail processing machine.

Therefore, it should now be apparent that the invention substantially achieves all the above aspects and advantages. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

The accompanying drawings illustrate presently preferred embodiments of the invention, and together with the general description given above and the detailed description given below, by way of example serve to explain the invention in more detail. As shown throughout the drawings, like reference numerals designate like or corresponding parts.
FIG. 1 illustrates in block diagram form a system according to an embodiment of the present invention;
FIG. 2 illustrates in block diagram form the architecture of a mail processing device according to an embodiment of the present invention; and
FIG. 3 illustrates in flow diagram form the operation of the mail processing device according to an embodiment of the present invention.

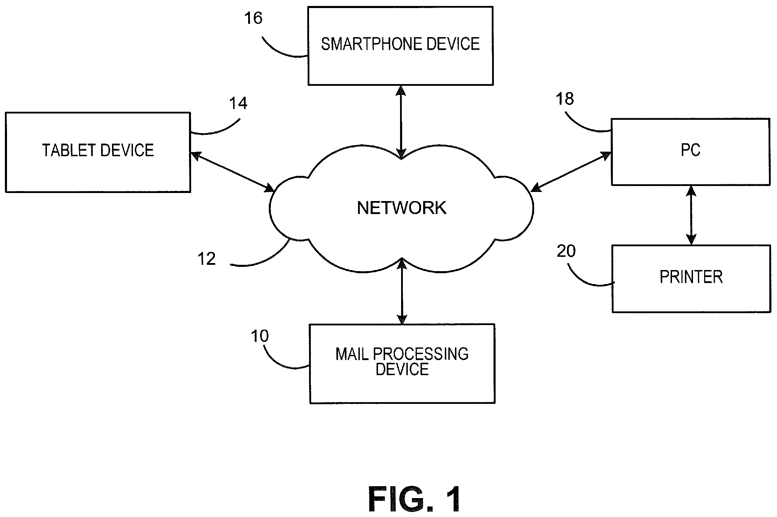

In describing the present invention, reference is made to the drawings, wherein there is seen in Fig. 1 in block diagram form a system according to an embodiment of the present invention. A mail processing device 10 is coupled to a network 12. The mail processing device 10 can be any type of mail processing device, such as, for example, the mailstation2™ Digital Mailing System from Pitney Bowes Inc., that can be used to generate and print postage and/or shipping labels for letters, parcels and the like. The network 12 can be any type of communication network, e.g., LAN, WAN, or the like, or any combination thereof. A plurality of other external processing devices are also coupled to the network 12. Such devices can include, for example, a tablet device 14, a smartphone device 16, and a personal computer 18. Each of these devices can also be used to control one or more operations of the mail processing device 10 as described further below. While three specific examples of external processing devices are illustrated in Fig. 1, it should be understood that the present invention is not so limited and any number and type of conventional processing device that has the capability to connect to a network and run a standard web browser can also be utilized. A printer 20, such as for example an ink-jet printer or the like, can be coupled to PC 18 and used to print postage/shipping labels generated by the mail processing device 10 via the PC 18.

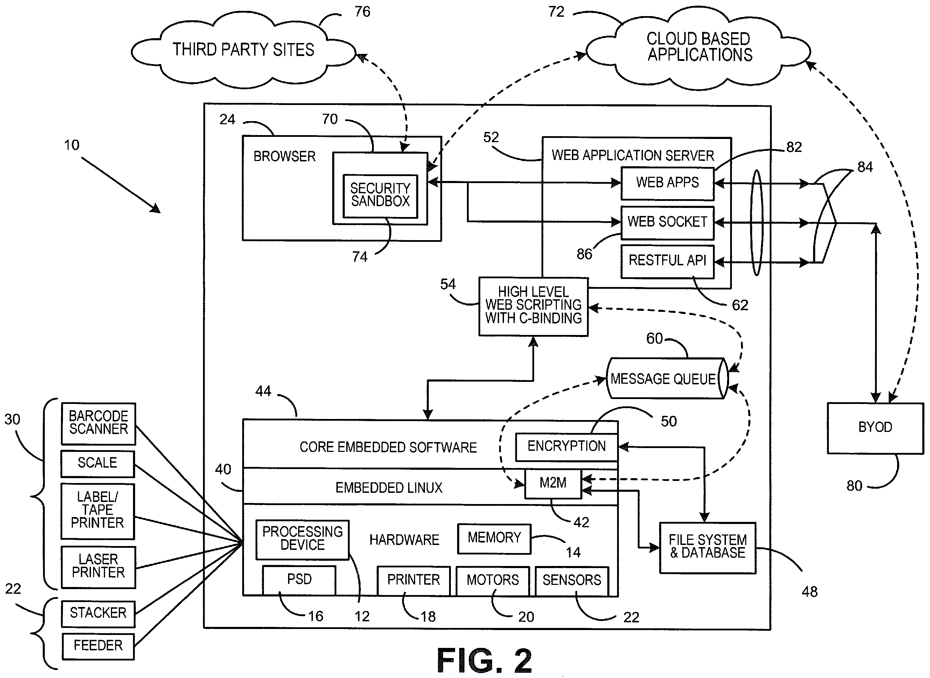

Fig. 2 illustrates in block diagram form the architecture of the mail processing device 10 according to an embodiment of the present invention. Mail processing device 10 includes a processing device 12, which may include a microprocessor, a microcontroller, or any other suitable processor, which is operatively coupled to a suitable memory device 14 for storing routines to be executed by the processing device. The memory device 14 can include RAM, Flash or any other suitable type of memory. A Postal Security Device (PSD) 16, as is known in the art, is provided for generating postage indicia, maintaining register values, and the storage of cryptographic keys used to generate postage indicia. An integrated printer 18 is provided to print postal indicia directly on mail pieces and/or shipping labels. A plurality of motors 20 and sensors 22 are provided to control the movement of mail pieces through the device 10. A display device 24 provides information to a user and can also be used to input information to the device 10. Additional peripherals 32, such as a mail stacker or feeder as are known in the art, can be coupled to the device 10 to allow mail being input to the device 10 to be automatically fed, and mail being output from the device 10 to be stacked. Other peripherals 30 can also be coupled to the device 10 for assisting with user input of information, e.g., a barcode scanner, scale, or output of information, e.g., external printers for the printing of labels, tape or reports.

The processing device 12 executes an operating system 40, such as, for example, Embedded Linux. Other operating systems can be used with the device 10. Machine-to-machine (M2M) technology 42 is present at this layer that allows easy updating of the operating system 40. M2M technology, as is known in the art, allows machines to communicate with each other without human intervention. It is commonly used to pass data from a device to an entity that can make a decision based on the data. It is also used to update software in devices. Thus, the M2M technology 42 provides a pipe for the core embedded software 44 to send data from the device 10 for analysis by other web applications, and enables the mailing machine 10 to be a part of the Internet of Things (IoT) if desired. The core embedded software 44 uses the operating system 40 to perform the functions of the mail processing device 10. The core software 44 will also contain any logic that is needed to manage multiple transactions within the device 10. The core software 44 contains a set of rules that indicate which transactions can occur in parallel and which ones cannot. Such rules that prevent parallel activity can include, for example: (i) two users cannot debit the PSD 16 at the same time, (ii) only one user can start a mailrun running remotely; (iii) only one user can refill the PSD 16 at a given time; and (iv) a user cannot withdraw a meter while another user is debiting it. In general, these rules exist so that the financial integrity of the PSD 16 is maintained and prevent two conflicting operations from occurring. However, there are other rules which do allow parallel activity, such as, for example, (i) a user can view the PSD 16 registers while another user is running mail; (ii) one user can edit his settings while another user edits his settings; and (iii) multiple users can rate shop at the same time. These rules have independent operations that will not change the overall state of the machine. Another implementation of rules is to use a Role Based Access Control (RBAC). Only an administrator would have capabilities to control the state of the machine such as refilling the PSD or downloading new software. Other users could have other privileges. There still may be a need to have rules which prevent conflict between users, but the roles could reduce the need as the role can specify what a user has access to do. In general, the rules are determined by the specific application implemented on the device 10 and must be compliant with postal regulatory requirements.

A file system 48, including a database for storage of information (which can be encrypted), exists that both the operating system 40 and core embedded software 44 can use. Encryption software 50 is employed to protect user data stored in the file system 48 database. Given that there are multiple users, it is important that each user's data be independent from each other. This can be accomplished by each user having a separate file or use of a multi-tenant database. The file system 48 will cache user credentials (if they are used) so that a user can access the device 10 if it is not connected to the web. The caching is needed because when credentials are used they are typically checked against a cloud based web server.

The core embedded software 44 interacts with an embedded web application server 52. The core embedded software 44 implements actions that the users can take and rules that make sure that a valid action is being performed given the state of the device 10. It also allows access to peripherals 30, 32 with which the users may interact. The web application server 52 allows users to employ browsers operating on an external processing device (e.g., tablet 14, smartphone 16, PC 18) to control the device 10. Thus, the user could be using the device's 10 internal browser 70 which renders information on the local display 24 or using a remote device with a browser. The embedded web application server 52 uses high-level web scripting 54 with 'C' binding to tie the user interface provided on the display 24 back into the core embedded software 44. Effectively, the core embedded software 44 has an API that will interact with the user interface. A message queue 60 is present so that requests can be buffered if the application is busy. The technology stack employed by the web application server 52 and interfaced to the core embedded software 44 is the "gaming technology" that is present on many Internet applications today. This allows many users to interact with the web applications at the same time. The device 10 includes an internal browser 70, that can be displayed on the display 24 for interaction with a user, that ties into the embedded web application server 52. Note that this is a programmatic interface to the device 10 that can be used while a physical user is interacting with the device 10 through the screens being displayed on the display 24. It also allows the device 10 to access web applications from its display 24. This would enable cloud based applications 72, like shipping or location intelligence applications, associated with the device 10 to be accessible from the device 10. A security sandbox 74 can also be provided to allow access to authorized cloud-based third party sites 76. The security sandbox allows third parties to have limited access to the device 10. There are a small set of commands and machine capabilities that will be accessible to these parties.

A RESTful API 62 exists that allows web applications 82 operated by external devices, e.g. PC 18, or applications running on BYOD devices 80 (e.g., tablet 14, smartphone 16) to interact with the device 10. This enables the same user experience to be available on devices outside of the device 10. HTTPS 84 and a web socket API 86 are used to transfer the data between the device 10 and other digital users that are using, for example, the PC 18, tablet 14 or smartphone 16.

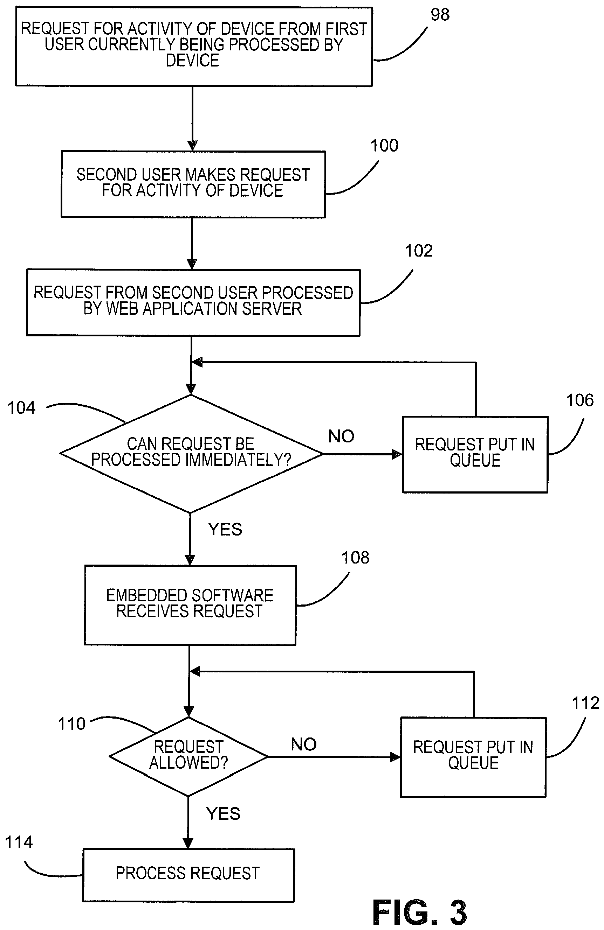

Fig. 3 illustrates in flow diagram form the operation of the mail processing device 10 according to an embodiment of the present invention. In step 98, the device 10 is currently processing a request made by a first user for some activity of the device 10. In step 100, a second user makes a request for some activity of the device 10 through the browser 70 or through a call through the RESTful API 62 from any one of the BYOD devices 80. In step 102, the request from the second user is processed by the Web Application Server 52. This processing includes high level web scripting with 'C' binding to move the request off of the server 52. Effectively, this provides the link between the code of the embedded software 44 and the code of the server 52. In step 104, it is determined if the device 10 can immediately process the request from the second user. This is based on the current status of the device 10. If in step 104 it is determined that the device 10 cannot process the request from the second user immediately, e.g., the device 10 is currently performing some other activity that prevents the processing of the request from the second user, then in step 106 the request is sent to the message queue 60 and will be delayed until the request can be processed. Once it has been determined in step 104 that the request from the second user can be processed, then in step 108 the embedded software 44 receives the request from the second user and in step 110 determines if the activity requested by the second user is allowed to be performed by checking the rules, that indicate which activities can occur simultaneously, i.e., in parallel, and which cannot, in conjunction with any activity that is currently in process as requested by other users, i.e., the first user.

If the activity requested by the second user is not currently allowed, e.g., the request is for an activity that is not allowed to be performed in parallel with another activity already being processed, then in step 112 the request is sent to the message queue 60 and will be delayed until the request can be processed. If in step 110 it is determined that the rules do not prohibit the request from being processed, e.g., there are no other activities currently being processed or the request is for an activity that can be performed in parallel with another activity already being processed, then in step 114 the request from the second user is processed and the activity is performed by the device 10. If user data must be changed, the database of the file system 48 is accessed for that specific user and the new data stored. Due to the gaming technology of the core embedded software 44, multiple users can be going through this flow and be in different steps depending on the timing of their request. The combination of gaming technology, separate user storage, and rules allow the requests of multiple users to be completed or denied while keeping the device 10 in an operational state.

There are numerous advantages provided by the architecture of the device 10. Multiple users to are allowed to simultaneously perform activities using different features of the device 10. Such activities include the capability to ship packages and debit registers by two different users, get an account balance while looking up a postal rate, allow multiple users to access the peripherals 30 that are attached to the device 10, allow one user to print a shipping label using the label/tape printer while another user gets the weight of a different package form the scale, allow one user to print an accounting report using the laser printer while another user debits the PSD 16, mailing/shipping jobs can be setup/programmed by different operators at any time or simultaneously, e.g., one user can be setting up address book of recipients, while another is loading funds or printing shipping labels, secure transactions can be pipelined by different users and executed as fast as possible to have a quick response time, the same user experience can occur on the device 10 and any external processing devices (e.g., PC 18, tablet device 14, or smartphone device 16, and initial out of the box setup/installation for the device 10 can be accomplished remotely from alternate devices, such as tablet 14, smartphone 16, or PC 12, which has a familiar user interface, and very often cloud connected. If multiple users try two operations that are not discrete, the device 10 will have rules on how to process the requests and execute them as soon as possible.

While preferred embodiments of the invention have been described and illustrated above, it should be understood that they are exemplary of the invention and are not to be considered as limiting. Additions, deletions, substitutions, and other modifications can be made without departing from the spirit or scope of the present invention. Accordingly, the invention is not to be considered as limited by the foregoing description but is only limited by the scope of the appended claims.

## Claims

1. A method for multiple users to simultaneously perform activities on a mail processing device, the method comprising:
receiving, by a processor of the mail processing device, a request for a first activity to be performed by the mail processing device from a first user;
processing, by the processor, the request to perform the first activity as requested by the first user;
receiving, by a processor of the mail processing device, a request for a second activity to be performed by the mail processing device from a second user;
determining, by the processor, if the second activity requested by the second user can be performed based on the first activity currently being performed by the mail processing device requested by the first user and a set of rules stored by the mail processing device, the set of rules indicating activities that can be performed in parallel and those that cannot be performed in parallel;
storing the second user's request for the second activity in a queue if it is determined that the second activity requested by the second user cannot be performed in parallel with the first activity being performed as requested by the first user until the first activity being performed as requested by the first user is completed; and
processing, by the processor, the request from the second user to perform the second activity as requested by the second user in parallel with the first activity as requested by the first user if it is determined from the set of rules that the second activity requested by the second user can be performed in parallel with the first activity currently being performed as requested by the first user.

2. The method of claim 1, wherein the request from the first user and the request from the second user are received from one of a browser operating on the mail processing device and via a network connection from a browser operating on a remote external device.

3. A mail processing device comprising:
a processing unit for controlling operation of said mail processing device; and
a memory storing a set of rules indicating activities that can be performed by the mail processing device in parallel and those that cannot be performed in parallel and software executable by said processing unit, said software including instructions for:
receiving a request for a first activity to be performed by the mail processing device from a first user;
processing the request to perform the first activity as requested by the first user;
receiving a request for a second activity to be performed by the mail processing device from a second user;
determining if the second activity requested by the second user can be performed based on the first activity currently being performed by the mail processing device requested by the first user and the set of rules stored in the memory;
storing the second user's request for the second activity in a queue if it is determined that the second activity requested by the second user cannot be performed in parallel with the first activity being performed as requested by the first user until the first activity being performed as requested by the first user is completed; and
processing the request from the second user to perform the second activity as requested by the second user in parallel with the first activity as requested by the first user if it is determined from the set of rules that the second activity requested by the second user can be performed in parallel with the first activity currently being performed as requested by the first user.

4. The mail processing device of claim 3, wherein the software instructions are for receiving the request from the first user and the request from the second user from one of a browser operating on the mail processing device and via a network connection from a browser operating on a remote external device.
